# EUROPEAN PATENT APPLICATION

(11) **EP 4 711 936 A1**
(43) Date of publication of application: **18.03.2026**
(21) Application number: 25159901.5
(22) Date of filing: 25.02.2025
(51) Int. Cl.: G06F 12/02

(54) **MEMORY SYSTEM AND METHOD OF CONTROLLING NONVOLATILE MEMORY**

(30) Priority: 17.09.2024 JP 2024160287
(71) Applicant: Kioxia Corporation, Tokyo 108-0023 (JP)
(72) Inventor: TAKEDA, Naomi, 108-0023 Minato-ku, Tokyo (JP); SHIRAKAWA, Masanobu, 108-0023 Minato-ku, Tokyo (JP)
(74) Representative: Hoffmann Eitle

(57) **Abstract**

According to one embodiment, a memory system (1) includes a controller (30) configured to write data and history information to one of a plurality of blocks. In copying first data that is valid data stored in a copy source block, to a copy destination block, the controller (30) reads the first data and first history information from the copy source block, the first history information being history information corresponding to the first data, and writes the read first data and second history information to the copy destination block. The second history information is based on a value of the read first history information.

## Description

### CROSS-REFERENCE TO RELATED APPLICATIONS

This application is based upon and claims the benefit of priority from Japanese Patent Application No. 2024-160287, filed September 17, 2024.

### FIELD

Embodiments described herein relate generally to a memory system and a method of controlling a nonvolatile memory.

### BACKGROUND

A memory system that includes a nonvolatile memory and a controller is known.

In such a memory system, different types of data are handled, such as data that is frequently rewritten and data that is infrequently rewritten. Data that is frequently rewritten is referred to as hot data, and data that is infrequently rewritten is referred to as cold data.

In a case where hot data and cold data are mixed together in a same block of the nonvolatile memory, it causes a decrease in the efficiency of a garbage collection for the nonvolatile memory, etc.

### BRIEF DESCRIPTION OF THE DRAWINGS

FIG. 1 is a block diagram illustrating an example of a configuration of an information processing apparatus that includes a memory system according to an embodiment.
FIG. 2 is a block diagram illustrating an example of a configuration of a nonvolatile memory included in the memory system according to the embodiment.
FIG. 3 is a circuit diagram illustrating an example of a configuration of a memory cell array of the nonvolatile memory.
FIG. 4 is a block diagram illustrating an example of a configuration of each of a sense amplifier and a data register of the nonvolatile memory.
FIG. 5 is a block diagram illustrating an example of a configuration of each of a plurality of blocks included in the nonvolatile memory.
FIG. 6 is a diagram illustrating an operation of writing data and history information to a data area and a surplus area, respectively.
FIG. 7 is a diagram illustrating an operation of reading data and history information from the data area and the surplus area, respectively.
FIG. 8 is a diagram illustrating an operation of writing four pieces of cluster data to the data area and writing four history information to the surplus area.
FIG. 9 is a diagram illustrating an operation of reading four pieces of cluster data from the data area and reading four history information corresponding to the four pieces of cluster data from the surplus area.
FIG. 10 is a diagram illustrating an operation of creating free blocks by a garbage collection (GC).
FIG. 11 is a diagram illustrating how hot data and cold data are copied to a same copy destination block by GC.
FIG. 12 is a flowchart illustrating a procedure of a host write operation executed in the memory system according to the embodiment.
FIG. 13 is a flowchart illustrating a procedure of GC executed in the memory system according to the embodiment.
FIG. 14 is a flowchart illustrating a procedure of a refresh operation executed in the memory system according to the embodiment.
FIG. 15 is a diagram illustrating an operation of writing a value, which is obtained by adding a first value to a value of the history information read from a GC source block, to a GC destination block when executing GC.
FIG. 16 is a diagram illustrating an operation of writing a value, which is obtained by adding a second value to a value of the history information read from a target block for a forced refresh, to another block.
FIG. 17 is a diagram illustrating an operation of writing a value, which is obtained by adding the first value to a value of the history information read from a target block subject to a normal refresh, to another block.
FIG. 18 is a diagram illustrating an operation of assigning a single representative history value to several pieces of cluster data.

### DETAILED DESCRIPTION

Various embodiments will be described hereinafter with reference to the accompanying drawings.

In general, according to one embodiment, a memory system comprises a nonvolatile memory and a controller. The nonvolatile memory includes a plurality of blocks. The controller is configured to write data and history information corresponding to the data to one of the plurality of blocks. A value of the history information is a value that is based on the number of times the data has been copied from a block where the data is stored to another block. In copying first data that is valid data stored in a copy source block of the plurality of blocks, to a copy destination block of the plurality of blocks, the controller reads the first data and first history information from the copy source block, the first history information being history information corresponding to the first data. The controller writes the read first data and second history information to the copy destination block, the second history information being based on a value of the read first history information.

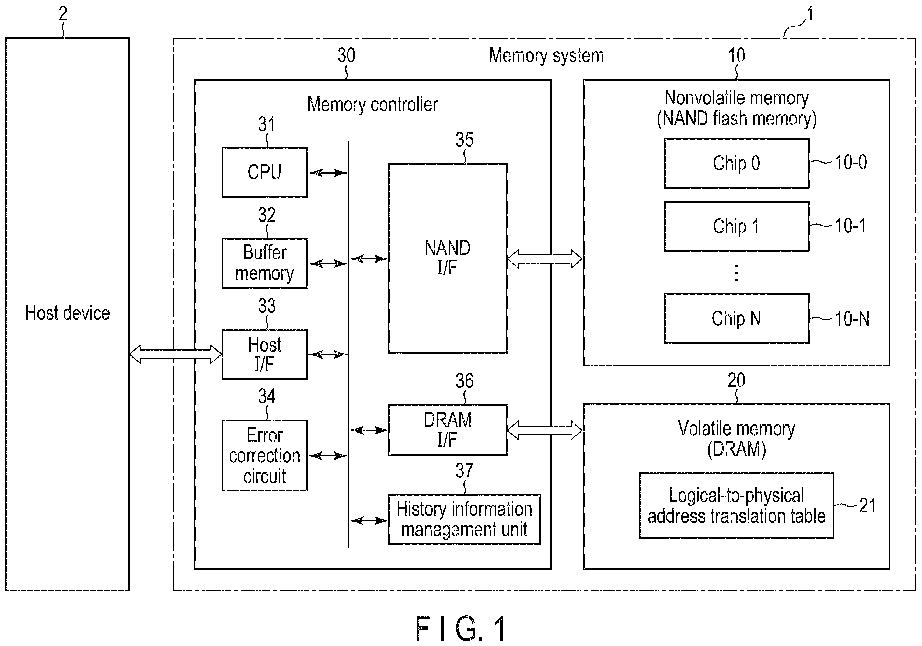

FIG. 1 is a block diagram illustrating an example of a configuration of an information processing apparatus that includes a memory system according to an embodiment. The information processing apparatus includes a memory system 1 and a host device 2.

The memory system 1 is a semiconductor storage device such as a universal flash storage (UFS) or a solid state drive (SSD). The memory system 1 is connected to the external host device 2, and based on a request from the host device 2, the memory system 1 executes data write processing and data read processing for a nonvolatile memory included in the memory system 1. The memory system 1 includes a nonvolatile memory 10, a volatile memory 20, and a memory controller 30.

The nonvolatile memory 10 is a nonvolatile semiconductor memory. The nonvolatile memory 10 is, for example, NAND flash memory. The nonvolatile memory 10 includes a plurality of blocks. Each of the plurality of blocks is a unit of data erase operation. Each of the plurality of blocks includes a plurality of pages. Each of the plurality of pages is a unit of each of data write operation and data read operation.

The nonvolatile memory 10 includes, for example, a plurality of chips 10-0 to 10-N, each of which includes a plurality of memory cells (N is an integer greater than or equal to one). Each of the chips 10-0 to 10-N is, for example, a NAND flash memory chip. Each of the chips 10-0 to 10-N may be a NAND flash memory in a three-dimensional configuration or a NAND flash memory in a two-dimensional configuration. In the following, the nonvolatile memory 10 is referred to as the NAND flash memory 10.

The volatile memory 20 is a volatile semiconductor memory. The volatile memory 20 is, for example, a dynamic random access memory (DRAM). A memory area of the volatile memory 20 is used to store firmware for managing the NAND flash memory 10 and various management information used in the memory system 1. Hereinafter, the volatile memory 20 is described as the DRAM 20.

An example of the management information is, for example, a logical-physical address translation table 21. The logical-physical address translation table 21 is a table for holding mapping information. The mapping information is information that indicates a correspondence between logical addresses included in a logical address space of the memory system 1 and physical addresses of the NAND flash memory 10 in units of a predetermined management size.

The logical address is an address used by the host device 2 to access the memory system 1. That is, the memory system 1 has a logical address space having a size corresponding to the capacity of the memory system 1, and individual logical addresses in the logical address space are used by the host device 2 to specify a write destination logical address within the logical address space or a read target logical address within the logical address space. For example, a logical block address (LBA) is used as the logical address.

The physical address is an address used to identify a storage location (physical storage location) within the NAND flash memory 10.

A cluster can be used as a predetermined management size. In this case, the mapping information manages the correspondence between each logical address and each physical address in units of clusters. The cluster has a size of 4 KB, for example.

The memory controller 30 is a controller having a circuit, and is realized as an LSI such as a system-on-a-chip (SoC). Hereinafter, the memory controller 30 is referred to as the controller 30.

The controller 30 is electrically connected to each of the NAND flash memory 10 and the DRAM 20. As a physical interface connecting the controller 30 and the NAND flash memory 10, for example, a toggle NAND flash interface or an open NAND flash interface (ONFI) is used.

The controller 30 executes data write processing based on a write request received from the host device 2. The data write processing is processing of writing data to the NAND flash memory 10. The data write processing, for example, includes acquiring write data associated with the received write request from a memory of the host device 2, determining a storage location within the NAND flash memory 10 where the write data is to be written, instructing the NAND flash memory 10 to execute the data write operation by transmitting a write command set (command, address , and data) to the NAND flash memory 10, and updating the logical-physical address translation table 21 to map the physical address, which indicates the storage location where the write data is written, to the write destination logical address specified by the write request.

In addition, the controller 30 executes data read processing based on a read request received from the host device 2. The data read processing is processing of reading data from the NAND flash memory 10. The data read processing includes referring to the logical-physical address translation table 21 to identify a physical address to which the logical address specified by the read request is mapped, transmitting a read command set (command and address) to the NAND flash memory 10 to cause the NAND flash memory 10 to execute the data read operation, and transferring data read from the NAND flash memory 10 to the memory of the host device 2.

Next, an internal configuration of the controller 30 is explained.

The controller 30 includes a processor (CPU) 31, a buffer memory 32, a host interface circuit 33, an error correction circuit 34, a NAND interface circuit 35, a DRAM interface circuit 36, and a history information management unit 37.

The processor 31 loads firmware stored in the NAND flash memory 10 or in a read-only memory (ROM) (not shown) into the DRAM 20. The processor 31 performs various processing as described below based on this firmware.

The processor 31 performs management of data stored in the NAND flash memory 10 and management of the plurality of blocks contained in the NAND flash memory 10, as a flash translation layer (FTL).

Management of data stored in the NAND flash memory 10 includes management of mapping information. The processor 31 manages the correspondence between each logical address and each physical address of the NAND flash memory 10 by using the logical-physical translation table 21. The logical-physical translation table 21 may be loaded from the NAND flash memory 10 to the DRAM 20 when the memory system 1 is powered on. A physical address corresponding to a certain logical address indicates a storage location (physical storage location) in the NAND flash memory 10 where data corresponding to this logical address is written.

Writing of data to each of the plurality of pages contained in a certain block is only able to be performed once per program/erase cycle of this block. For this reason, the processor 31 writes updated data corresponding to a certain logical address to a different physical storage location, rather than to the physical storage location where the previous data corresponding to this logical address is stored. The processor 31 then updates the logical-physical translation table 21 so that the physical address indicating this other physical storage location is mapped to this logical address. By updating the logical-physical translation table 21 in this way, the previous data is invalidated.

In the following, data stored in the physical storage location indicated by the physical address mapped to a certain logical address is referred to as valid data. Valid data is the latest data corresponding to a certain logical address, that is, data that may be read from the host device 2 later. In addition, data stored in the physical storage location indicated by the physical address that is not mapped to any logical address is referred to as invalid data. Invalid data is data that is no longer likely to be read from the host device 2.

Management of blocks contained in the NAND flash memory 10 includes, for example, a garbage collection (GC) and a refresh operation.

GC is an operation that reduces the number of blocks that contain a mixture of valid and invalid data, and increases the number of free blocks. A free block is a block that does not contain valid data, that is, a block that can be freely used for writing data after the execution of a data erase operation for that block. A free block is also referred to as an unused block.

As writing of data to the NAND flash memory 10 progresses, the number of written blocks increases, and the number of free blocks decreases. A written block is a block that is filled with data and contains at least valid data. In addition, in each written block, the number of invalid data increases due to writing of updated data to the NAND flash memory 10. Therefore, for example, in a case where a condition that the number of remaining free blocks has become a predetermined number or less is met, the processor 31 executes GC of the NAND flash memory 10 in order to enable some of the written blocks to be reused for writing data.

In GC, the processor 31 selects a GC target block from the written blocks, as a copy source block (also referred to as a GC source block). The GC target block is a block that contains a mixture of valid data and invalid data. For example, the processor 31 determines a block that has a lower valid data rate among the blocks that contain a mixture of valid data and invalid data, as the GC target block. The processor 31 then copies the valid data stored in the GC target block to a copy destination block (also referred to as a GC destination block). That is, the processor 31 reads the valid data from the GC target block and writes the read valid data to the copy destination block.

When the valid data is copied from the GC target block (the copy source block) to the copy destination block, the processor 31 updates the logical-physical translation table 21 so that the physical address mapped to the logical address corresponding to this valid data is changed from a physical address of a copy source physical storage location to a physical address of a copy destination physical storage location. As a result, the valid data in the copy source block that has been copied to the copy destination block becomes invalid data. When all valid data in the copy source block has been copied to the copy destination block, all data in the copy source block becomes invalid data. Therefore, this copy source block is released as a free block.

Note that, it is possible to determine whether or not each piece of data stored in the GC target block is valid data by using bitmap data that includes a plurality of bits indicating whether or not each of the plurality of data stored in the GC target block is valid or invalid. Alternatively, when determining whether or not the data stored at a certain physical storage location within the GC target block is valid data, a physical address mapped to the logical address corresponding to this data may be obtained from the logical-physical address translation table 21. In this case, it is possible to determine whether or not the data stored at this physical storage location is valid data based on whether or not the obtained physical address matches the physical address of this physical storage location.

A refresh operation is an operation that rewrites each of valid data stored in a target block for the refresh operation to a different block. As the types of refresh operation, there are a first type refresh operation referred to as a forced refresh and a second type refresh operation referred to as a normal refresh.

The forced refresh is a refresh operation that rewrites each of data (valid data) stored in a block in which a threshold period or more has elapsed since data was written, to another block. In other words, in the memory system 1, an operation of rewriting data written to a block of the NAND flash memory 10 to another block within a certain period of time is executed. For this reason, a block in which the threshold period or more has elapsed since data was written is selected as a forced refresh target block, and each of valid data in the selected block is rewritten to another block.

The normal refresh is a refresh operation that rewrites each of the data (valid data) stored in a block in which a predetermined number or more of error bits are included in read data (e.g., a block in which a predetermined number or more of error bits are included in read data even after execution of a read voltage adjustment operation referred to as "Vth tracking") to another block.

The buffer memory 32 is a memory used to temporarily store read data read from the NAND flash memory 10 and write data received from the host device 2. The buffer memory 32 is, for example, a static random access memory (SRAM).

The host interface circuit 33 is connected to the host device 2 via a bus and executes communication between the controller 30 and the host device 2. The bus is, for example, a bus compliant with serial attached SCSI (small computer system interface) (SAS), serial ATA (advanced technology attachment) (SATA), or peripheral component interconnect express (PCIe).

The error correction circuit 34 is a circuit for protecting data (user data) which to be written to the NAND flash memory 10 with an error correction code (ECC). The error correction circuit 34 encodes user data to be written to the NAND flash memory 10 to generate a codeword that includes the user data and ECC. In addition, the error correction circuit 34 decodes the codeword (user data and ECC) read from the NAND flash memory 10 to detect and correct errors included in the user data. For example, hard bit decoding and soft bit decoding can be used as methods for error detection and correction. For example, a Bose-Chaudhuri-Hocquenghem (BCH) code or a Reed-Solomon (RS) code can be used as a code used for hard bit decoding. For example, a low density parity check (LDPC) code can be used as a code used for soft bit decoding.

The NAND interface circuit 35 is connected to the NAND flash memory 10 via a memory bus and executes communication with the NAND flash memory 10. The NAND interface circuit 35 controls the transfer of data, commands, and addresses between the controller 30 and the NAND flash memory 10.

The DRAM interface circuit 36 is connected to the DRAM 20 and executes communication between the controller 30 and the DRAM 20.

The history information management unit 37 executes processing such as determining the type (hot data or cold data) of each piece of data based on the value of the history information corresponding to each piece of data. The value of the history information corresponding certain data is a value that is based on the number of times this data has been copied from a block where this data is stored to another block. The operation of copying data from a certain block to another block may be executed by GC. For this reason, the value of the history information corresponding to certain data is used as information indicating the number of times (GC count) that this data has become GC target data.

The history information corresponding to certain data is used to determine whether this data is hot data or cold data. Here, hot data is data corresponding to each LBA that is frequently write-accessed by the host device 2. Cold data is data corresponding to each LBA that is not frequently write-accessed by the host device 2. In other words, data that is frequently rewritten is hot data, and data that is not frequently rewritten is cold data.

If hot data and cold data are mixed in the same block at a similar ratio to each other (for example, in a case where approximately half of the data in a block size is hot data and approximately the other half is cold data), the efficiency of GC may be significantly reduced.

However, the LBAs (or LBA ranges) that are frequently write-accessed and the LBAs (or LBA ranges) that are not frequently write-accessed are not predetermined. When observing a log relating to host writes over a long period of time, it may be found that LBAs that are frequently write-accessed and LBAs that are not frequently write-accessed are interchangeable.

In addition, the information given by the host device 2 when writing data does not normally include information indicating the type of write data. For this reason, it is difficult for the memory system 1 to determine whether this write data is hot data or cold data from the information (write destination LBA, write data, etc.) given by the host device 2 when writing data.

Therefore, in the present embodiment, the controller 30 executes processing of writing data and history information corresponding to the data to one of the plurality of blocks of the NAND flash memory 10, that is, to one write destination block, in order to be able to identify the type (hot data/cold data) of each piece of data written to the NAND flash memory 10. When copying certain valid data stored in a copy source block of these plurality of blocks to a copy destination block of these plurality of blocks, the controller 30 reads both the valid data and the corresponding history information from the copy source block. The controller 30 writes the valid data read from the copy source block to the copy destination block, and also writes a value greater than the value of the history information read from the copy source block to the copy destination block, as new history information corresponding to the valid data read from the copy source block.

Note that the operation of copying certain valid data from a certain block to another block may be executed by GC or, also, by the refresh operation.

Normally, the longer the period during which data is maintained as valid data, the more times this data is selected as target data for GC (or refresh operation). For this reason, cold data has the characteristic of being more likely to be selected as target data for GC (or refresh operation) than hot data.

Therefore, by writing both data and history information to a write destination block and increasing the value of the history information each time the data copy operation is performed, it is possible to effectively use the value of the history information for distinguishing between hot data and cold data.

In more detail, in a case where the value of the history information written in the block together with the certain data is greater than or equal to a threshold value, this data can be determined to be cold data, and in a case where the value of the history information is less than the threshold value, this data can be determined to be hot data.

Next, a configuration of the NAND flash memory 10 is described.

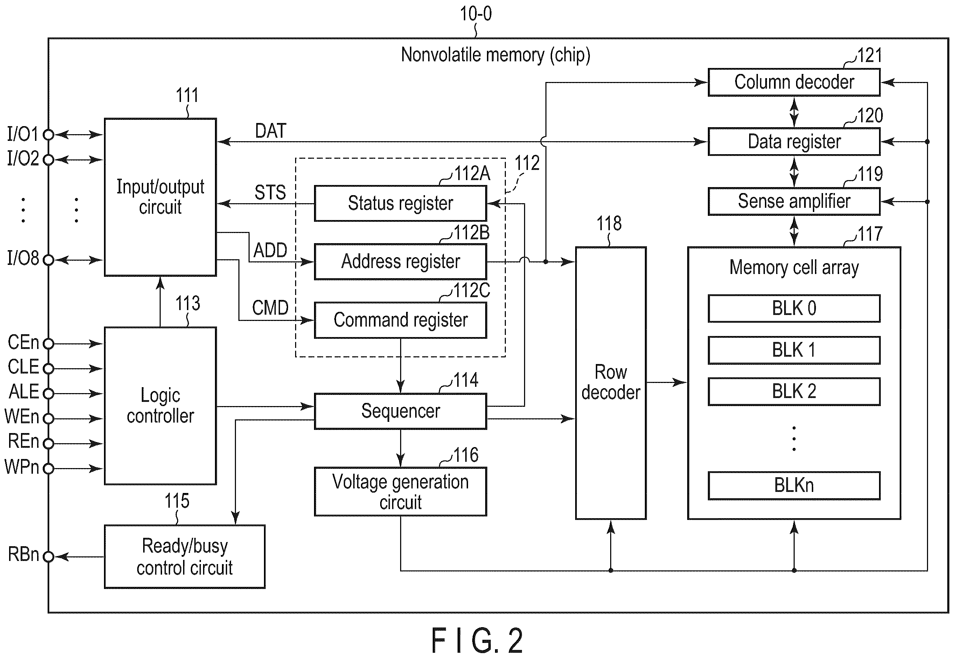

FIG. 2 is a block diagram illustrating an example of a configuration of the NAND flash memory 10.

In FIG. 2, a configuration of the chip 10-0 is illustrated as an example. Note that the chips 10-1 to 10-N other than the chip 10-0 have the same configuration as the chip 10-0, so the descriptions thereof are omitted.

As shown in FIG. 2, the chip 10-0 includes an input/output circuit 111, a register set 112, a logic controller 113, a sequencer 114, a ready/busy control circuit 115, a voltage generation circuit 116, a memory cell array 117, a row decoder 118, a sense amplifier 119, a data register 120, and a column decoder 121.

The input/output circuit 111 is a circuit that transmits and receives, for example, 8-bit width input/output signals I/O1 to I/O8 to and from the controller 30. The input/output signals I/O1 to I/O8 are used for transmitting and receiving data DAT, transmitting a status STS, receiving an address ADD, and receiving a command CMD. In addition, the input/output circuit 111 transmits and receives the data DAT to and from the data register 120.

The register set 112 includes a status register 112A, an address register 112B, and a command register 112C. The status register 112A, the address register 112B, and the command register 112C are registers that store the status STS, the address ADD, and the command CMD, respectively.

The status STS is updated based on the operating state of the sequencer 114, for example. The status STS is transferred from the status register 112A to the input/output circuit 111 based on instructions from the controller 30, and is output to the controller 30. The address ADD is transferred from the input/output circuit 111 to the address register 112B. The address ADD may include, for example, a chip address, a block address, a page address, and a column address. The command CMD is transferred from the input/output circuit 111 to the command register 112C. The command CMD includes instructions related to various operations of the chip 10-0.

The logic controller 113 controls each of the input/output circuit 111 and the sequencer 114 based on control signals received from the controller 30. Such control signals include, for example, a chip enable signal CEn, a command latch enable signal CLE, an address latch enable signal ALE, a write enable signal WEn, a read enable signal REn, and a write protect signal WPn.

The chip enable signal CEn is a signal for enabling the chip 10-0. The command latch enable signal CLE is a signal that notifies the Input/output circuit 111 that the received input/output signals I/O are a command CMD. The address latch enable signal ALE is a signal that notifies the input/output circuit 111 that the received input/output signals I/O are an address ADD. The write enable signal WEn is a signal that instructs the input/output circuit 111 to Input the input/output signals I/O. The read enable signal REn is a signal that instructs the input/output circuit 111 to output the input/output signals I/O. The write protect signal WPn is a signal that puts the chip 10-0 into a protected state when the power is turned on or off.

The sequencer 114 controls the overall operation of the chip 10-0. For example, the sequencer 114 executes the data read operation, the data write operation, and the data erase operation based on the command CMD stored in the command register 112C and the address ADD stored in the address register 112B.

The ready/busy control circuit 115 generates a ready/busy signal RBn based on the operating state of the sequencer 14. The ready/busy signal RBn is a signal that notifies the controller 30 whether the chip 10-0 is in a ready state or a busy state. Note that, in the present specification, the "ready state" indicates that the chip 10-0 is in a state where it can accept commands from the controller 30, and the "busy state" indicates that the chip 10-0 is not in a state where it can accept commands from the controller.

The voltage generation circuit 116 generates voltages used respectively in the data read operation, the data write operation, the data erase operation, etc. The voltage generation circuit 116 supplies each of the generated voltages to the memory cell array 117, the row decoder 118, and the sense amplifier 119.

The memory cell array 117 includes a plurality of blocks BLK0 to BLKn (where n is an integer greater than or equal to two). A block BLK is a set of memory cell transistors that can store data nonvolatilely and is used as a unit for the data erase operation. Each memory cell transistor is associated with a single bit line BL and a single word line WL.

The row decoder 118 selects one block BLK from the plurality of blocks BLK based on the block address. The row decoder 118 then supplies a voltage supplied from the voltage generation circuit 116 to the word line WL in the selected block BLK.

In the data read operation, the sense amplifier 119 reads data from the memory cell array 117 and transfers the read data to the data register 120. In addition, in the data write operation, the sense amplifier 119 applies a predetermined voltage to the bit line BL based on the data stored in the data register 120.

The data register 120 is a register that temporarily stores the data DAT. The data register 120 is connected to the sense amplifier 119. The data register 120 includes a plurality of latch circuits. Each latch circuit temporarily stores write data or read data.

The column decoder 121 is a circuit that performs column address decoding. The column decoder 121 receives a column address from the address register 112B. The column decoder 121 selects a latch circuit in the data register 120 based on the decoding result of the column address.

Next, a configuration of the memory cell array 117 is described.

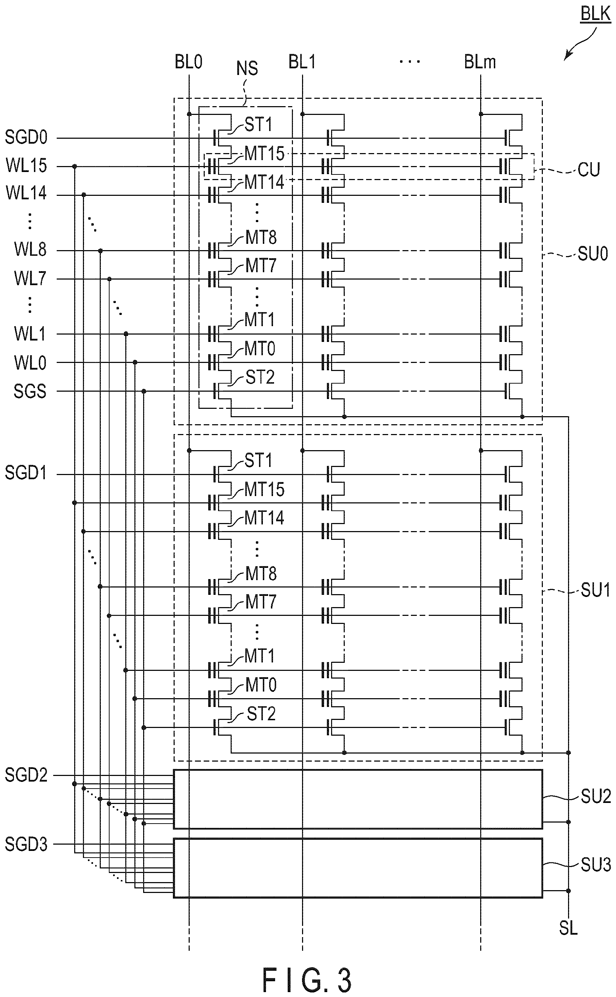

FIG. 3 is a circuit diagram illustrating an example of a configuration of the memory cell array 117 included in the NAND flash memory 10. In FIG. 3, a configuration of one block BLK of the memory cell array 117 is shown.

As shown in FIG. 3, the block BLK includes, for example, four string units SU0 to SU3. Note that, in FIG. 3, the configuration of the string units SU2 and SU3 is shown in a simplified manner.

Each string unit SU includes a plurality of NAND strings NS, which are respectively associated with bit lines BLO to BLm (m is an integer greater than or equal to one). The NAND strings NS include, for example, memory cell transistors MTO to MT15, as well as select transistors ST1 and ST2.

A memory cell transistor MT includes a control gate and a charge storage layer, and stores data nonvolatilely. Each of the select transistors ST1 and ST2 is used to select a string unit SU during various operations.

In each NAND string NS, the memory cell transistors MTO to MT15 are connected in series. The select transistor ST1 is connected between one end of the series-connected memory cell transistors MTO to MT15 and an associated bit line BL. The other end of the series-connected memory cell transistors MTO to MT15 is connected to a drain of the select transistor ST2. A source of the select transistor ST2 is connected to a source line SL.

In the same block BLK, the gates of the plurality of select transistors ST1 included in each of the string units SU0 to SU3 are connected in common to a corresponding select gate line among select gate lines SGDO to SGD3. The control gates of the plurality of memory cell transistors MTO included in each of the string units SU0 to SU3 are connected in common to one word line WL0. The same is applied to the memory cell transistors MT1 to MT15 included in each of the string units SU0 to SU3. The gates of the plurality of select transistors ST2 included in each of the string units SU0 to SU3 are connected in common to a select gate line SGS.

The bit lines BL0 to BLm are shared among the plurality of blocks BLK. The same bit line BL is connected to the NAND strings NS corresponding to the same column address. Each of the word lines WL0 to WL15 is provided for each block BLK. The source line SL is shared among the plurality of blocks BLK, for example.

A set of plurality of memory cell transistors MT connected to a common word line WL in a single string unit SU is referred to as a cell unit CU, and corresponds to a page, which is the unit of each of the data write operation and the data read operation. For example, the storage capacity of a cell unit CU including memory cell transistors MT each storing one bit of data is defined as "one page data". The cell unit CU can have a storage capacity of two or more pages of data, depending on the number of bits of data stored by the memory cell transistor MT.

Note that the circuit configuration of the memory cell array 117 described above is only one example; therefore, is not limited thereto. For example, the number of string units SU included in each block BLK can be designed to be any number. The number of memory cell transistors MT, as well as the number of select transistors ST1 and ST2, included in each NAND string NS can be designed to be any number.

Next, a configuration of the sense amplifier 119 and the data register 120 is explained.

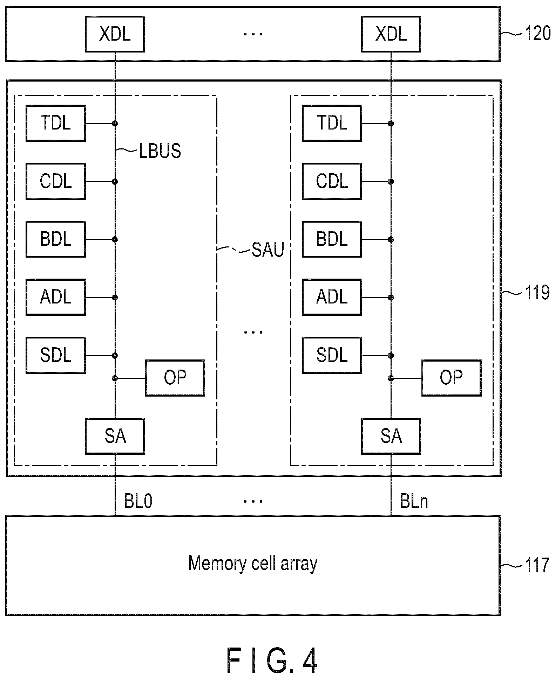

FIG. 4 is a block diagram illustrating an example of a configuration of each of the sense amplifier 119 and the data register 120 of the NAND flash memory 10.

The sense amplifier 119 includes a plurality of sense amplifier units SAU. The plurality of sense amplifier units SAU are connected to a plurality of bit lines BLO to BLn, respectively.

The data register 120 includes a plurality of latch circuits XDL. The plurality of latch circuits XDL are connected to the plurality of sense amplifier units SAU, respectively. The plurality of latch circuits XDL are used for transmitting and receiving data to and from the controller 30. In the data read operation, data read from a certain block BLK in the memory cell array 117 is stored in the plurality of latch circuits XDL. In the data write operation, data (write data) received from the controller 30 is stored in the plurality of latch circuits XDL.

The sense amplifier unit SAU includes a sense circuit SA, an arithmetic unit OP, and latch circuits SDL, ADL, BDL, CDL, and TDL. The sense circuit SA and latch circuits SDL, ADL, BDL, CDL, and TDL are connected in common to a corresponding latch circuit XDL via a bus LBUS. In other words, the latch circuit XDL, the sense circuit SA, and the latch circuits SDL, ADL, BDL, CDL, and TDL are connected to each other via the bus LBUS so that they can transmit and receive data to and from each other. Note that the number of latch circuits included in the sense amplifier unit SAU can be designed based on the number of data bits that can be stored by one memory cell transistor MT.

During data read operations, the sense circuit SA senses data read from the corresponding bit line BL and determines whether the read data is "0" or "1". During data write operations, the sense circuit SA applies a voltage to the bit line BL based on the write data.

The arithmetic unit OP performs various logical operations using the data stored in the latch circuits XDL, SDL, ADL, BDL, CDL, and TDL.

The latch circuits SDL, ADL, BDL, CDL, and TDL temporarily store read data or write data. For example, in the case of a data read operation, the read data is stored in one of the latch circuits SDL, ADL, BDL, CDL, and TDL. In the case of a data write operation, the write data in the latch circuit XDL is stored in one of the latch circuits SDL, ADL, BDL, CDL, and TDL.

The latch circuit XDL is used as a cache for data input/output between the sense amplifier unit SAU and the input/output circuit 111. More specifically, the write data received from the controller 30 is transmitted to the latch circuit SDL, ADL, BDL, CDL, or TDL via the latch circuit XDL. In addition, data read from a certain block BLK in the memory cell array 117 is temporarily held in the latch circuit SDL, ADL, BDL, CDL, or TDL, and then transmitted to the controller 30 via the latch circuit XDL.

Next, a configuration of each block BLK is described.

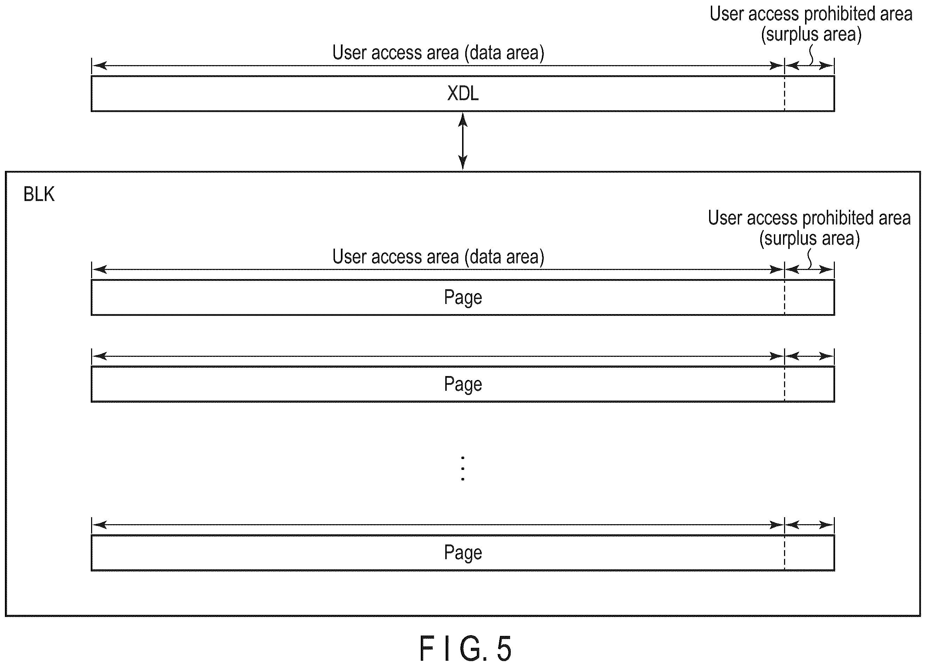

FIG. 5 is a block diagram illustrating an example of a configuration of each of the plurality of blocks BLK included in the NAND flash memory 10.

The NAND flash memory 10 supports a function (also referred to as a surplus area write function) that, when writing data to a write destination block, writes arbitrary information other than this data to a surplus area of this write destination block. Furthermore, the NAND flash memory 10 also supports a function (also referred to as a surplus area read function) that, when reading data from a read target block, reads information stored in the surplus area of this read target block.

That is, as shown in FIG. 5, each of the plurality of blocks BLK includes a plurality of pages, and each of the plurality of pages includes a data area that is permitted to be accessed from outside the NAND flash memory 10 and a surplus area that is an area other than the data area.

The data area is an area that can be write-accessed and read-accessed using normal write commands and normal read commands, respectively, and is also referred to as a user access area.

On the other hand, the surplus area is an area that is prohibited from being accessed until a specific procedure for accessing this surplus area is executed for the NAND flash memory 10, and is also referred to as a user access prohibited area.

Data transfer between the pages including the data area and the surplus area and the controller 30 is executed via the XDL. In FIG. 5, a set of a plurality of latch circuits XDL is shown as a single XDL. A data area of the XDL is an area corresponding to the data area of each page. A surplus area of the XDL is an area corresponding to the surplus area of each page.

In the present embodiment, the controller 30 writes data to the data area of one of the plurality of pages (a write destination page) within the block BLK, and writes history information (information indicating GC count) corresponding to this data to the surplus area of this write destination page using a specific procedure.

In this case, the data received from the controller 30 (e.g., a codeword including user data and ECC) is temporarily stored in the data area of the XDL. In addition, the history information received from the controller 30 is temporarily stored in the surplus area of the XDL. Then, the data stored in the data area of the XDL is written to the data area of the write destination page, and the history information stored in the surplus area of the XDL is written to the surplus area of this write destination page.

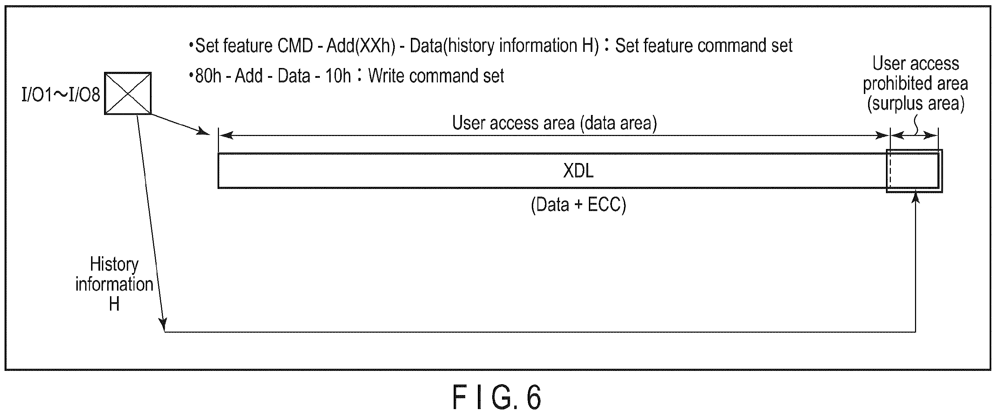

FIG. 6 is a diagram illustrating an operation of writing data and history information to the data area and the surplus area, respectively.

Here, a case is assumed in which a set feature command is used as a specific procedure for performing a write access to the surplus area.

The controller 30 instructs the NAND flash memory 10 to write history information H to the surplus area by transmitting a set feature command set (set feature command CMD, address (XXh), and data (history information H)) to the NAND flash memory 10. Here, the combination of the set feature command CMD and the address (XXh) is used to designate the surplus area write function, which is one of the plurality of functions supported by the NAND flash memory 10. In the NAND flash memory 10, the history information H received from the controller 30 is temporarily stored in the surplus area of the XDL.

Next, the controller 30 instructs the NAND flash memory 10 to write data to the data area by transmitting a write command set (command 80H, address, data, and command 10H) to the NAND flash memory 10. Here, an address following the command 80H includes an address that designates the write destination block and an address that designates the write destination page within this write destination block. In NAND flash memory 10, the data received from the controller 30 (e.g., user data and ECC) is temporarily stored in the data area of the XDL.

In response to receiving the write command set from the controller 30 after receiving the set feature command set from the controller 30, the NAND flash memory 10 writes the data stored in the data area of the XDL and the history information H stored in the surplus area of the XDL respectively to the data area and the surplus area included in the write destination page in the write destination block.

In this manner, data is written to the data area within the write destination page designated by the write command set that follows the set feature command set, and the history information H is written to the surplus area within this write destination page designated by the write command set.

Next, an operation for reading data and history information is described.

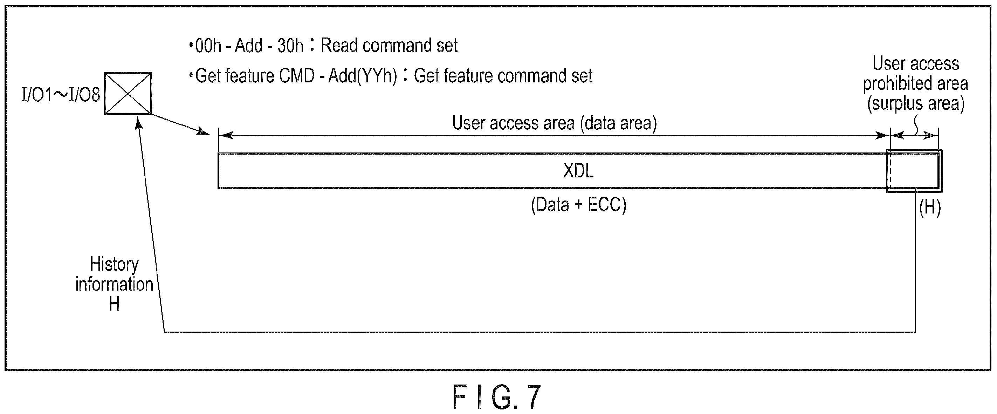

FIG. 7 is a diagram illustrating an operation of reading data and history information from the data area and the surplus area, respectively.

Here, a case is assumed in which a get feature command is used as a specific procedure for performing a read access to the surplus area.

First, the controller 30 instructs the NAND flash memory 10 to read data from the data area by transmitting a read command set (command 00H, address, and command 30H) to the NAND flash memory 10. Here, an address following the command 00H includes an address that designates a read target block and an address that designates a read target page within the read target block. The address following the command 00H may further include an address within the read target page.

Next, the controller 30 instructs the NAND flash memory 10 to read the history information H stored in the surplus area by transmitting a get feature command set (get feature command CMD and address (YYh)) to the NAND flash memory 10. Here, the combination of the get feature command CMD and the address (YYh) is used to designate the surplus area read function among the plurality of functions supported by the NAND flash memory 10.

In response to receiving the get feature command set from the controller 30 after receiving the read command set from the controller 30, the NAND flash memory 10 reads the data and the history information H respectively from the data area and the surplus area of the read target page in the read target block designated by the read command set. The read data and the read history information H are output to the controller 30 via the XDL.

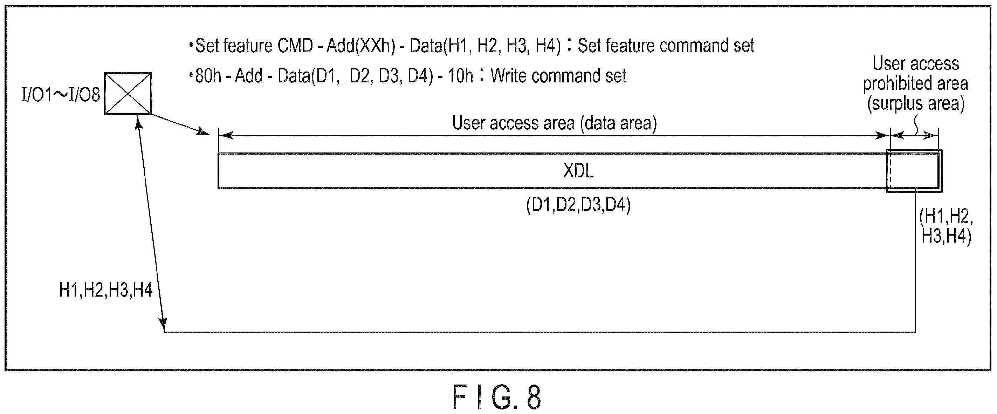

FIG. 8 is a diagram illustrating an operation of writing four pieces of cluster data to the data area and writing four history information to the surplus area.

A page size, or the size of the data area of each page, is, for example, 16 KB + α. The capacity corresponding to α is used, for example, for storing the ECC corresponding to the data of 16 KB. In a case where one cluster is 4 KB and the page size is 16 KB + α, four pieces of cluster data and four ECCs corresponding to these four pieces of cluster data can be written to the data area. Each cluster data is data with a size of 4 KB. In this case, four pieces of cluster data can be written to the data area of a certain page, and four pieces of history information respectively corresponding to the four pieces of cluster data can be written to the surplus area of this page.

First, the controller 30 transmits a set feature command set (set feature command CMD, address (XXh), and data (history information H1, history information H2, history information H3, and history information H4)) to the NAND flash memory 10, thereby instructing the NAND flash memory 10 to write the history information H1, the history information H2, the history information H3, and the history information H4 to the surplus area. In the NAND flash memory 10, the history information H1 to H4 received from the controller 30 are temporarily stored in the surplus area of the XDL.

Next, the controller 30 instructs the NAND flash memory 10 to write data (in this case, cluster data D1, cluster data D2, cluster data D3, and cluster data D 4) to the data area by transmitting a write command set (command 80H, address, data, and command 10H) to the NAND flash memory 10. In the NAND flash memory 10, the cluster data D1, the cluster data D2, the cluster data D3, and the cluster data D4 received from the controller 30 are temporarily stored in the data area of the XDL.

In response to receiving the write command set from the controller 30 after receiving the set feature command set from the controller 30, the NAND flash memory 10 writes the data stored in the data area of the XDL (cluster data D1, cluster data D2, cluster data D3, cluster data D4) and the history information (history information H1, history information H2, history information H3, history information H4) stored in the surplus area of the XDL to the data area and the surplus area included in the write destination page within the write destination block, respectively.

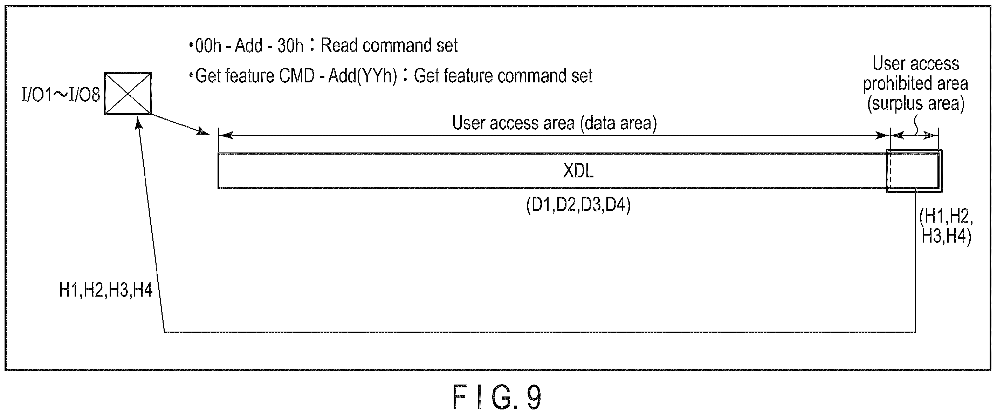

FIG. 9 is a diagram illustrating an operation of reading four pieces of cluster data from the data area and reading four history information corresponding to the four pieces of cluster data from the surplus area.

First, the controller 30 instructs the NAND flash memory 10 to read data from the data area by transmitting a read command set (command 00H, address, and command 30H) to the NAND flash memory 10.

Next, the controller 30 instructs the NAND flash memory 10 to read the history information stored in the surplus area by transmitting a get feature command set (get feature command CMD and address (YYh)) to the NAND flash memory 10.

In response to receiving the get feature command set from the controller 30 after receiving the read command set from the controller 30, the NAND flash memory 10 reads the data (cluster data D1, cluster data D2, cluster data D3, cluster data D4) stored in the data area of the read target page in the read target block designated by the read command set and the history information (history information H1, history information H2, history information H3, history information H4) stored in the surplus area of this read target page, respectively. The read data (cluster data D1, cluster data D2, cluster data D3, cluster data D4) and the read history information (history information H1, history information H2, history information H3, history information H4) are output to the controller 30 via the XDL.

In this manner, in the present embodiment, the history information corresponding to each piece of data is written to the surplus area, rather than the data area used for writing data (data and ECC). Note that it is also possible to use a configuration in which both the data and the history information corresponding to this data are written to the data area. However, in this case, since a portion of the data area will be used to store the history information, the size of the data area that is available for writing data will be reduced by the size of the history information. By writing the history information to the surplus area, it is possible to record the GC count for each piece of data without reducing the size of the data area that is available for writing data.

Next, GC is described.

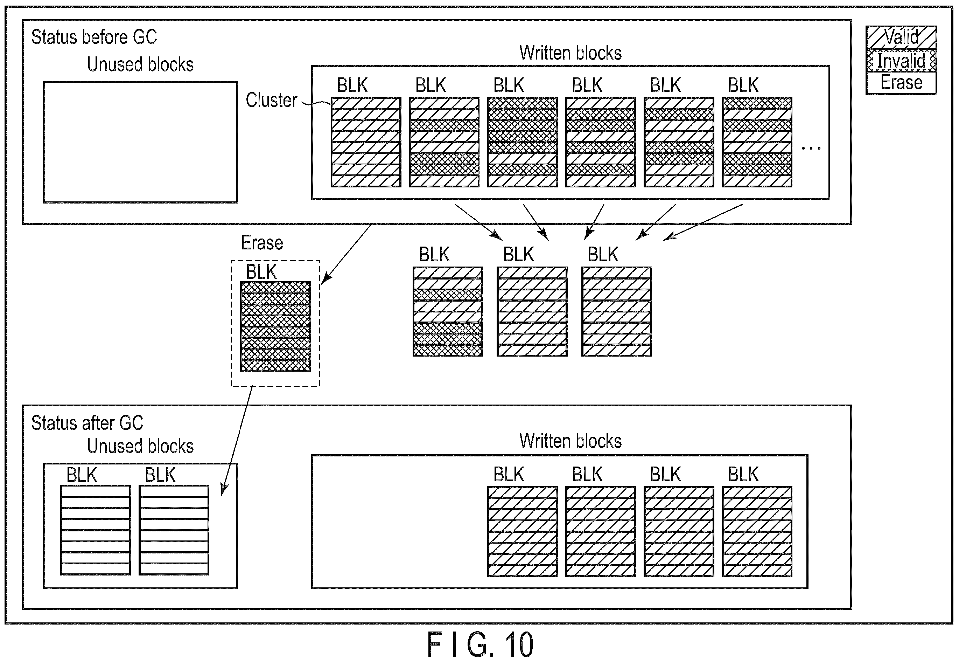

FIG. 10 is a diagram illustrating an operation of creating free blocks by GC.

In FIG. 10, a case is assumed in which each block BLK is configured by a set of eight clusters. A small horizontal rectangle within each block BLK indicate one cluster.

The state of each cluster is either a state in which valid data (valid cluster data) is stored, a state in which invalid data (invalid cluster data) is stored due to the writing of updated data, or an erase state in which data has not yet been written after a block data erase operation has been executed.

The upper part of FIG. 10 shows a status of the NAND flash memory 10 before GC. The lower part of FIG. 10 shows a status of the NAND flash memory after GC. The middle part of FIG. 10 shows how each piece of valid cluster data is copied by GC.

Before GC, the number of unused blocks (free blocks) has dropped below a certain threshold value.

In the upper part of FIG. 10, a blank unused block frame represents a status where there are actually some free blocks remaining, but the number of remaining free blocks is small.

In addition, there are many written blocks before GC. Among these written blocks, for example, there are blocks in which all stored data are valid data, as well as several blocks in which valid data and invalid data are mixed.

When executing GC, the controller 30, for example, preferentially selects a block with a lower valid data rate from among the written blocks, as a target block for GC (GC source block).

The controller 30 then allocates a free block as a copy destination block BLK (GC destination block) and copies only each valid cluster data from the GC source block to the GC destination block.

When certain valid cluster data is copied from the GC source block to the GC destination block, the controller 30 updates the logical-physical address translation table 21 so that the physical address of the copy destination storage location of this valid cluster data is mapped to the logical address corresponding to this valid cluster data. As a result, the valid cluster data in the GC source block that has been copied to the GC destination block is invalidated.

The GC source block, in which all valid cluster data has been copied to the GC destination block, is reused for writing of data after the data erase operation for the GC source block is executed.

Each of the GC destination blocks is filled with eight pieces of valid cluster data by the GC. Each of the GC destination blocks filled with eight pieces of valid cluster data is managed as a written block.

In the lower part of FIG. 10, which shows the status after GC, a case in which each of all the written blocks is filled with eight pieces of valid cluster data is shown as an example.

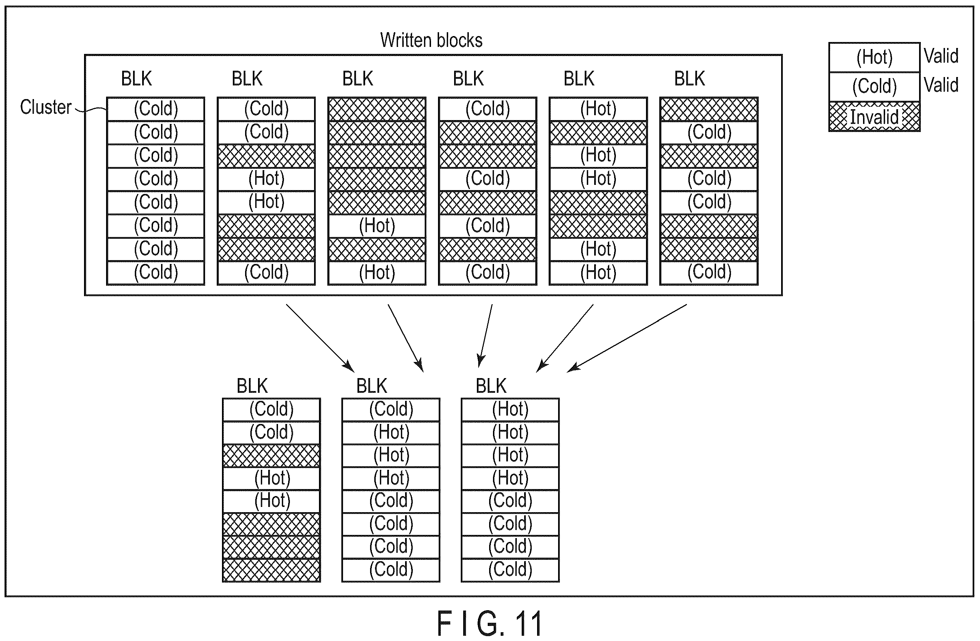

FIG. 11 is a diagram illustrating how hot data and cold data are copied to a same GC destination block (copy destination block) by GC.

Each valid cluster data may be either hot data or cold data. Therefore, when GC has been executed using the procedure explained in FIG. 10, there is a possibility that valid cluster data that is hot data and valid cluster data that is cold data will be mixed together in the same GC destination block, as shown in the lower part of FIG. 11. In FIG. 11, a small, horizontal, white rectangle with "(Hot)" or "(Cold)" written thereon represents valid data (valid cluster data). Here, "(Hot)" represents data that potentially has the properties of hot data, and "(Cold)" represents data that potentially has the properties of cold data. Normally, it is not possible to determine whether individual data is hot data or cold data. For this reason, in FIG. 11, the potential properties of individual data are expressed with parentheses, such as "(Hot)" and "(Cold)". In this manner, since it is not possible to distinguish between hot data and cold data in normal cases, hot data and cold data are mixed together in the same block. In such cases, the GC efficiency decreases.

Of the eight pieces of valid cluster data copied to the GC destination block, each piece of valid cluster data that is hot data may be invalidated immediately by writing updated data.

For example, in the GC destination block BLK at the lower right of FIG. 11, four of the eight pieces of copied valid cluster data are hot data (i.e., (Hot)), and the remaining four are cold data (i.e., (Cold)).

Therefore, if each hot data (i.e., (Hot)) in this GC destination block BLK is invalidated, the valid data rate of this GC destination block BLK will decrease. Therefore, this GC destination block BLK will be more likely to be selected as a GC target block. If this GC destination block BLK is selected as a GC target block, the four pieces of valid cluster data that are cold data (i.e., (Cold)) are copied to another block again.

Therefore, in each block, it is desirable for more data in the block to be cold data or more data in the block to be hot data.

In a case where almost all of the data in a block is hot data, the valid data rate of this block will be low. If all of the data is invalidated by writing updated data, this block can be made into a free block without executing GC for this block. Even in a case where some of the hot data in this block is maintained as valid data, this block can be made into a free block with only a small amount of data copied, improving GC efficiency.

On the other hand, in a case where almost all of the data in a block is cold data, the valid data rate of this block is maintained at a high level. Therefore, this block is a block that does not require GC. As a result, the cold data in this block will not be copied by GC.

In the present embodiment, the controller 30 executes the following processing to enable easy determination of whether each piece of data that has become the GC target is cold data or hot data by using the number of times it has been selected as the GC target, and to improve GC efficiency by avoiding, as much as possible, mixing of cold data and hot data within the same block.

### (1) Data writing

In writing data to a certain block, the controller 30 writes history information (GC count) to this block.

### (1-1) Host write

Host write is data write processing that is executed based on a write request received from the host device 2. In executing the host write, that is, in writing data associated with the write request received from the host device 2 to a write destination block, the controller 30 writes an initial value (e.g., 0) of the history information (GC count) to the write destination block.

### (1-2) GC

In copying valid data from a GC source block to a GC destination block by GC, the controller 30 writes to the GC destination block a value obtained by adding a first value (e.g., 1) to a value of previous history information (GC count) corresponding to this valid data. Note that, the value of each history information is limited to a certain upper limit value. Therefore, in a case where the value of the previous history information (GC count) has reached the upper limit value, the controller 30 writes the same value as the previous history information (GC count) to the GC destination block.

### (1-3) Refresh operation

### (1-3-1) Forced refresh operation

In copying valid data from a target block for forced refresh operation to another block by the forced refresh operation, the controller 30 writes to this other block a value obtained by adding a second value to a value of the previous history information (GC count) corresponding to this valid data. The second value is the same as the first value, or a value greater than the first value. Each piece of valid data in the target block for forced refresh operation is data that has been held as valid data in this block for a long time. Therefore, the GC count for each of these pieces of valid data is likely to be maintained at a relatively small value. Therefore, in order to make it easier for each piece of valid data in the target block for forced refresh operation to be treated as cold data, it is preferable to add the second value that is greater than the first value to the value of the previous history information (GC count).

### (1-3-2) Normal refresh operation

In copying valid data from a target block for normal refresh operation to another block by the normal refresh operation, the controller 30 writes to this other block a value obtained by adding a first value (e.g., 1) to a value of the previous history information (GC count) corresponding to this valid data in the same manner as in the case of GC.

### (2) Switching of GC destination block

In executing GC, the controller 30 switches the block to be used as the GC destination block between the GC destination block allocated for cold data and the GC destination block allocated for hot data, based on whether or not the value of the history information (GC count) read from the GC source block is greater than or equal to a threshold value. In this manner, by switching the block to be used as the GC destination block, it is possible to write cold data and hot data to different blocks. As a result, it is possible to avoid mixing cold data and hot data in the same block, and to improve GC efficiency.

Next, a host write procedure is described.

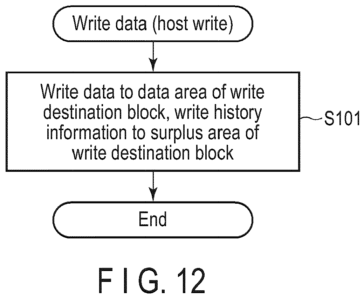

FIG. 12 is a flowchart illustrating a procedure of a host write operation executed in the memory system 1.

In response to receiving a write request from the host device 2, the controller 30 writes data associated with the write request and an initial value (e.g., 0) of history information (GC count) corresponding to this data to a write destination block (step S101). In this case, the controller 30 writes data to the data area of a write destination page in the write destination block, and writes the initial value of the history information (GC count) to the surplus area of the write destination page. The writing of the initial value of the history information (GC count) to the surplus area is executed using the set feature command.

Next, a GC procedure is described.

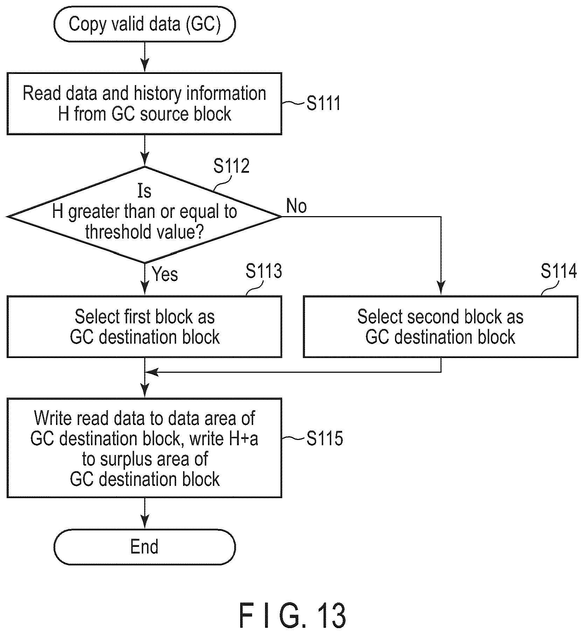

FIG. 13 is a flowchart illustrating a procedure of GC executed in the memory system 1.

In executing GC, the controller 30 selects a block with a lower valid data rate as a target block for GC (GC source block). The controller 30 reads both the valid data stored in the GC source block and the history information H corresponding to this valid data from the GC source block (step S111). In step S111, the valid data is read from the data area of a certain page in the GC source block, and the history information H is read from the surplus area of this page. The reading of the history information H from the surplus area is executed using the get feature command.

The controller 30 determines whether or not the value of the read history information H is greater than or equal to the threshold value (step S112).

In a case where the value of the read history information H is greater than or equal to the threshold value (step S112, Yes), the controller 30 selects a first block as the GC destination block (step S113). The first block is a block allocated for collecting cold data and is referred to as a write destination block for cold data or a GC destination block for cold data.

In a case where the value of the read history information H is smaller than the threshold value (step S112, No), the controller 30 selects a second block that is different from the first block as the GC destination block (step S114). The second block is a block allocated for collecting hot data and is referred to as a write destination block for hot data or a GC destination block for hot data.

The controller 30 writes the read valid data to the data area of the GC destination block (GC destination block for cold data or GC destination block for hot data), and writes (H+a) to the surplus area of the GC destination block (GC destination block for cold data or GC destination block for hot data) (step S115).

In more detail, in a case where the value of the read history information H is greater than or equal to the threshold value, the controller 30 writes the read valid data to the data area of one of the plurality of pages included in the GC destination block for cold data, and writes (H+a) to the surplus area of this page. In a case where the value of the read history information H is smaller than the threshold value, the controller 30 writes the read valid data to the data area of one of the plurality of pages included in the GC destination block for hot data, and writes (H+a) to the surplus area of this page.

Here, the "H" in (H+a) is the value of the read history information H, the "a" in (H+a) is, for example, 1, and (H+a) is a value obtained by adding 1 to "H", for example. Writing (H+a) to the surplus area is executed using the set feature command.

Note that, in S115, the controller 30 may determine whether or not the value of the read history information H has reached the upper limit value. In this case, in a case where it is determined that the value of the read history information H has reached the upper limit value, the controller 30 writes the same value as the read history information H, that is, "H", to the surplus area, and in a case where it is determined that the value of the read history information H has not yet reached the upper limit value, (H+a) is written to the surplus area. The upper limit value is a value determined based on the size of the history information, and this upper limit value is a value greater than the threshold value used in S112. Therefore, by limiting the value of the history information to the upper limit value, it is possible to switch the GC destination block to which data should be copied between the GC destination block for cold data and the GC destination block for hot data without unnecessarily increasing the value of the history information.

Next, a procedure for refresh operation is described.

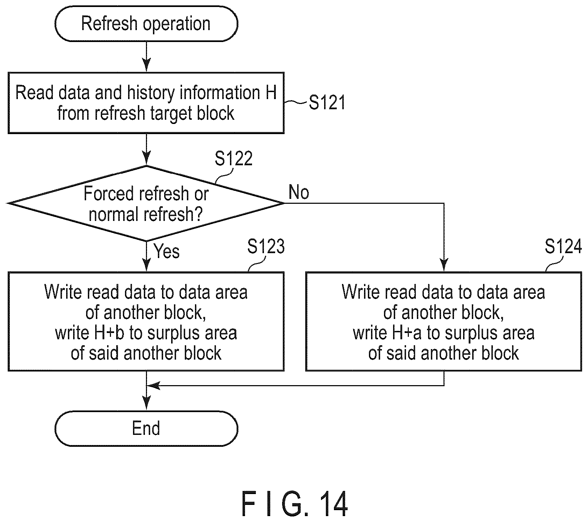

FIG. 14 is a flowchart illustrating a procedure of a refresh operation executed in the memory system 1.

In executing a forced refresh or a normal refresh, the controller 30 selects a refresh target block. In the case of the forced refresh, the refresh target block is a block in which a threshold period or more has elapsed since data was written. In the case of the normal refresh, the refresh target block is a block in which the read data contains a predetermined number or more of error bits even after the read voltage adjustment operation is executed.

The controller 30 reads both the valid data stored in the refresh target block and the history information H corresponding to this valid data from the refresh target block (step S121). In step S121, the valid data is read from the data area of a page in the refresh target block, and the history information H is read from the surplus area of this page. The reading of the history information H from the surplus area is executed using the get feature command.

The controller 30 determines whether the currently executing refresh operation is a forced refresh or a normal refresh (step S122).

In a case where it is determined that the currently executing refresh operation is the forced refresh (step S122, Yes), the controller 30 writes the read valid data to the data area of another block (a copy destination block for refresh), and writes (H+b) to the surplus area of the copy destination block for refresh (step S123). In more detail, the controller 30 writes the read valid data to the data area of one of the plurality of pages included in the copy destination block for refresh, and writes (H+b) to the surplus area of this page. The "H" in (H+b) is a value of the read history information H, and the "b" in (H+b) is a value greater than or equal to "a". In order to make it easier for the data that has become the target of the forced refresh to be classified as cold data, it is preferable to set "b" to a value greater than "a".

On the other hand, in a case where it is determined that the currently executing refresh operation is the normal refresh (step S122, No), the controller 30 writes the read valid data to the data area of the copy destination block for refresh, and writes (H+a) to the surplus area of the copy destination block for refresh (step S124).

Note that, in both S123 and S124, the value of the history information is limited to the upper limit value in the same manner as in the case of GC.

Next, an example of GC in the present embodiment is described.

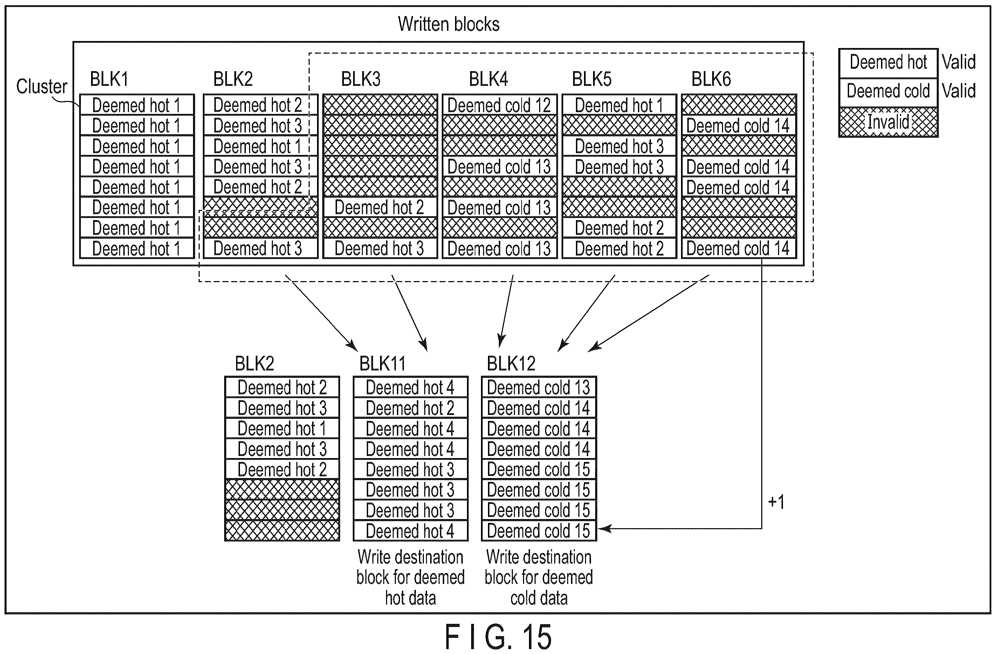

FIG. 15 is a diagram illustrating an operation of writing a value, which is obtained by adding a first value to a value of the history information read from a GC source block, to a GC destination block when executing GC. The first value corresponds to the "a" mentioned above.

In FIG. 15, blocks BLK1 to BLK6 are the written blocks, i.e., the blocks that have already been written. In FIG. 15, similarly to the case in FIG. 10, a case in which each block BLK contains a set of eight clusters is assumed. The small horizontal rectangle within each block BLK indicates a cluster. The small, horizontal, white rectangle with "(Hot)" or "(Cold)" written thereon indicates valid data (valid cluster data). In other words, of the eight pieces of cluster data in each block, each piece of cluster data that is valid data is represented by "deemed hot" or "deemed cold". Here, "deemed hot" represents that this piece of cluster data is treated as hot data in the present embodiment. In addition, "deemed cold" represents that this piece of cluster data is treated as cold data in the present embodiment. In addition, the number next to "deemed hot" or "deemed cold" in each piece of cluster data that is valid data represents the value of the history information stored in the surplus area. Here, the threshold value is 10. Each piece of cluster data whose corresponding history information value is less than 10 is represented as "deemed hot", and each piece of cluster data whose corresponding history information value is 10 or more is represented as "deemed cold". In addition, the first value here is 1. In some cases, cluster data that is "deemed hot" may truly be hot data. However, in a case where cluster data which is truly be cold data is stored in a block containing many pieces of valid data, the number of times this cluster data becomes the GC target is small. In this case, the value of the history information corresponding to this cluster data may be small. Since such cluster data also exists, "deemed hot" does not necessarily mean that the data is actually hot data that is frequently rewritten. However, since such cluster data is not likely to be selected as a GC target in the first place, there is little possibility that such cluster data and other cluster data that is actually hot data will be written to the same write destination block in the GC of the present embodiment.

Of the blocks BLK1 to BLK6, the block with the lowest valid data rate is BLK3. Therefore, the controller 30 selects BLK3 as the target block for GC (GC source block).

In block BLK3, first cluster data and third cluster data are valid data.

The controller 30 reads the first cluster data and first history information corresponding to the first cluster data from block BLK3. The value of the first history information corresponding to the first cluster data is 3. Therefore, since the first cluster data is determined to be "deemed hot", the controller 30 selects the write destination block allocated for hot data as the GC destination block. In FIG. 15, block BLK11 is the write destination block allocated for hot data. The controller 30 then writes the read first cluster data to a first cluster of block BLK11, and writes a value 4, which is obtained by adding 1 to the read first history information, to block BLK11 as new history information corresponding to the read first cluster data.

The controller 30 reads the third cluster data and third history information corresponding to the third cluster data from block BLK3. The value of the third history information corresponding to the third cluster data is 2. Therefore, since the third cluster data is determined to be "deemed hot", the controller 30 selects block BLK11 as the GC destination block. The controller 30 then writes the read third cluster data to a second cluster of block BLK11, and writes a value 3, which is obtained by adding 1 to the read third history information, to block BLK11 as new history information corresponding to the read third history information.

The blocks with the next lowest valid data rates after block BLK3 are blocks BLK4 and BLK6. Here, a case is assumed in which block BLK6 is selected as the GC target block (GC source block).

In block BLK6, first cluster data, fourth cluster data, fifth cluster data, and seventh cluster data are valid data.

The controller 30 reads the first cluster data and first history information corresponding to the first cluster data from block BLK6. The value of the first history information corresponding to the first cluster data is 14. Therefore, since the first cluster data is determined to be "deemed cold", the controller 30 selects the write destination block allocated for cold data as the GC destination block. In FIG. 15, block BLK12 is the write destination block allocated for cold data. The controller 30 then writes the read first cluster data to a first cluster of block BLK12, and writes a value 15, which is obtained by adding 1 to the read first history information, to block BLK12 as new history information corresponding to the read first cluster data.

In the same manner, the remaining three pieces of valid cluster data in block BLK6 are determined to be "deemed cold". Therefore, the remaining three pieces of valid cluster data in block BLK6 and three pieces of new history information with the value of 15, respectively, are written to block BLK12.

Next, block BLK4 is selected as the copy source block. Four pieces of valid cluster data in block BLK4 are determined to be "deemed cold". Then, the four pieces of valid cluster data in block BLK4 and four pieces of new history information (14, 14, 14, 13) are written to block BLK12.

Next, block BLK5 is selected as the copy source block. Five pieces of valid cluster data in block BLK5 are determined to be "deemed hot". Then, the five pieces of valid cluster data in block BLK5 and five pieces of new history information (3, 3, 4, 4, 2) are written to block BLK11. At this stage, seven pieces of valid cluster data have been written to BLK11, so the number of remaining available clusters in BLK11 is one. First cluster data in BLK2 is valid data, and the value of first history information corresponding to this first cluster data is 3. Therefore, the first cluster data in block BLK2 is data that is determined to be "deemed hot". Therefore, the first cluster data in block BLK2 and one piece of new history information (4) may be written to block BLK11.

Next, an example of the forced refresh in the present embodiment is described.

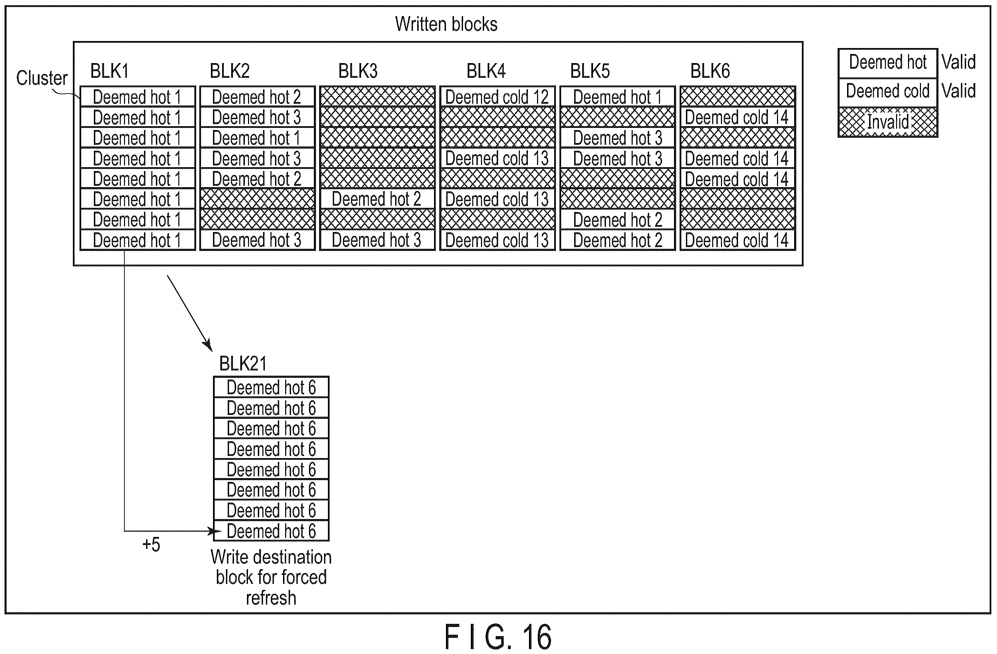

FIG. 16 s a diagram illustrating an operation of writing a value, which is obtained by adding a second value to a value of the history information read from a target block for a forced refresh, to another block. The second value corresponds to the "b" mentioned above.

In FIG. 16, a small, horizontal, white rectangle with "(Hot)" or "(Cold)" written thereon represents valid data (valid cluster data). In addition, in FIG. 16, a case is assumed in which block BLK1 has been selected as the target block for the forced refresh. Block BLK1 is a block in which a threshold period or more has elapsed since data was written. Here, a case is assumed in which each of the eight pieces of cluster data in block BLK1 is valid data, and the value of the history information corresponding to each of these eight pieces of cluster data is 1. In addition, the second value here is 5.

The controller 30 reads eight pieces of cluster data and eight pieces of history information corresponding to these eight pieces of cluster data from block BLK1. The controller 30 then writes each of these eight pieces of cluster data to a write destination block (here, block BLK21) for forced refresh, and writes a value 6, which is obtained by adding 5 to each value of the history information, to block BLK21 as new history information corresponding to each of the eight pieces of cluster data.

Next, an example of the normal refresh in the present embodiment is described.

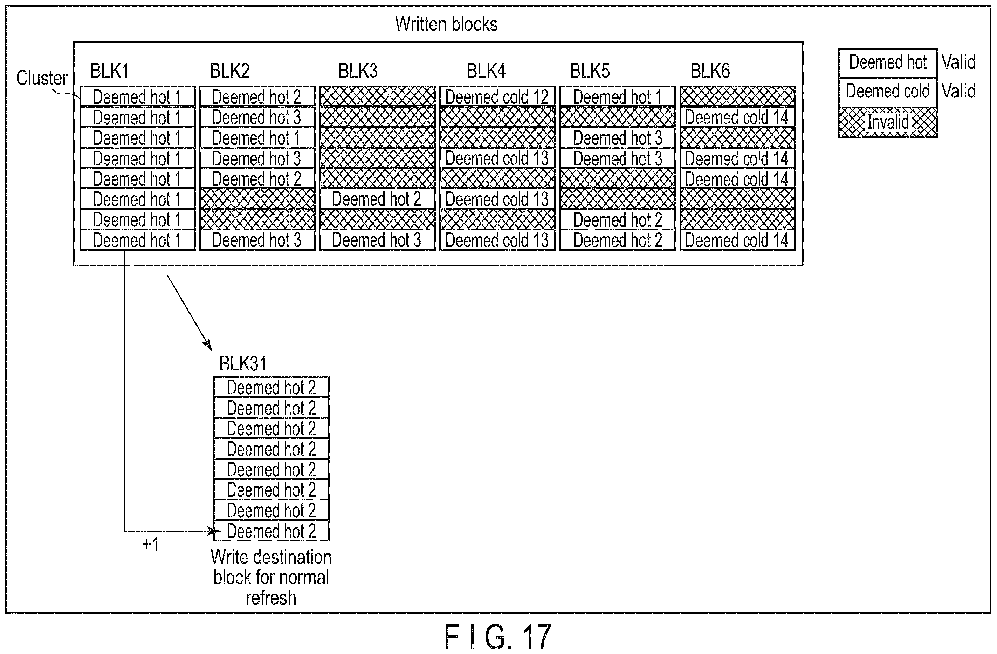

FIG. 17 is a diagram illustrating an operation of writing a value, which is obtained by adding the first value to a value of the history information read from a target block subject to a normal refresh, to another block.

In FIG. 17, a small, horizontal, white rectangle with "(Hot)" or "(Cold)" written thereon represents valid data (valid cluster data). In addition, in FIG. 17, a case is assumed in which block BLK1 is selected as the target block for the normal refresh. Here, a case is assumed in which each of the eight pieces of cluster data of block BLK1 is valid data, and the value of the history information corresponding to each of these eight pieces of cluster data is 1. In addition, the first value here is 1.

The controller 30 reads eight pieces of cluster data and eight pieces of history information corresponding to these eight pieces of cluster data from block BLK1. The controller 30 then writes each of these eight pieces of cluster data to a destination block for normal refresh (here, block BLK31), and writes a value 2, which is obtained by adding 1 to the value of each piece of history information, to block BLK31 as new history information corresponding to each of the eight pieces of cluster data.

The above describes the case where one piece of history information is assigned to one piece of cluster data. With this configuration, the GC count can be strictly managed for each piece of cluster data.

However, it is also possible to use a configuration where one representative history value is assigned to several pieces of cluster data.

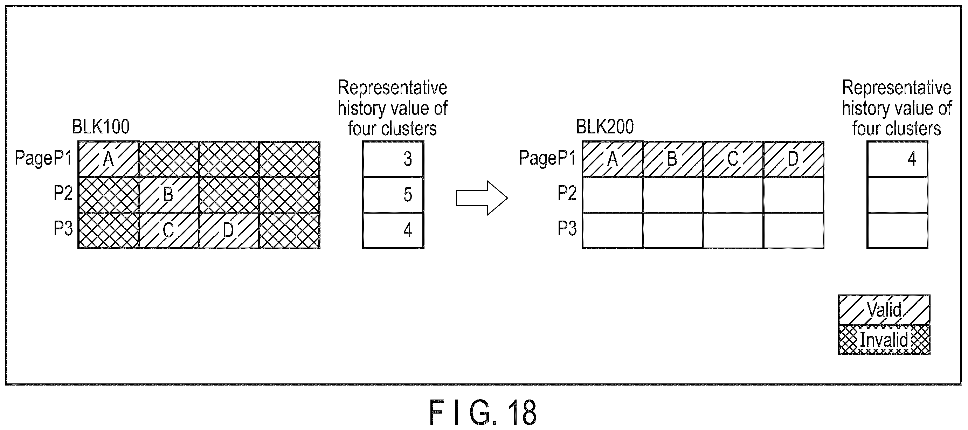

FIG. 18 is a diagram illustrating an operation of assigning a single representative history value to several pieces of cluster data.

In FIG. 18, a case is assumed in which data for four clusters is written to the data area of each page, and one representative history value is written to the surplus area of each page.

Four pieces of cluster data are written in the data area of each of pages P1 to P3 of block BLK100, and a representative history value is written in the surplus area of each of pages P1 to P3. As the representative history value, for example, a minimum value of the four pieces of history information corresponding to the four pieces of cluster data may be used. As a result, the GC count of the most frequently updated data among the four pieces of cluster data stored on the same page becomes the representative history value, making it possible to prevent the most frequently updated data among the four pieces of cluster data stored on the same page from being classified as cold data. Specific details are described below.

In page P1 of block BLK100, only cluster data A is valid data, and the other three pieces of cluster data have already become invalid data. The representative history value of the four pieces of cluster data in page P1 is 3.

In page P2 of block BLK100, only cluster data B is valid data, and the other three pieces of cluster data have already become invalid data. The representative history value of the four pieces of cluster data in page P2 is 5.

In page P3 of block BLK100, cluster data C and cluster data D are both valid data, while the other two pieces of cluster data have already become invalid data. The representative history value of the four pieces of cluster data in page P3 is 4.

In other words, the value of the history information for cluster data A is 3, the value of the history information for cluster data B is 5, the value of the history information for cluster data C is 4, and the value of the history information for cluster data D is 4.

Here, a case is assumed in which cluster data A, cluster data B, cluster data C, and cluster data D in block BLK100 are copied to page P1 in block BLK200 by GC.

The controller 30 selects block BLK100, which is the target block for GC, as a copy source block. The controller 30 reads cluster data A and representative history value 3 from page P1 of block BLK100, reads cluster data B and representative history value 5 from page P2 of block BLK100, and reads cluster data C, cluster data D, and representative history value 4 from page P3 of block BLK100. The minimum value of the representative history values corresponding to cluster data A, cluster data B, cluster data C, and cluster data D is 3. Therefore, the controller 30 writes cluster data A, cluster data B, cluster data C, and cluster data D to the data area of page P1 of block BLK200, and writes 4, which is a value obtained by adding 1 to the minimum value 3, to the surplus area of page P1 of block BLK200 as the representative history value for cluster data A, cluster data B, cluster data C, and cluster data D.

As explained above, according to the present embodiment, the controller 30 writes data and history information corresponding to the data to one of the plurality of blocks BLK of the NAND flash memory 10. When copying valid data stored in a copy source block of the plurality of blocks BLK to a copy destination block of these plurality of blocks BLK, the controller 30 reads both the valid data and the history information corresponding to the valid data from the copy source block. The controller 30 then writes the read valid data to the copy destination block, and writes a value that is greater than the value of the read history information to the copy destination block as new history information corresponding to the valid data. Generally, the longer the period during which data is maintained as valid data, the more frequently this data is selected as the target data for GC (or refresh operation). For this reason, cold data is more likely to be selected as GC (or refresh operation) target data than hot data. Therefore, by writing both data and history information to the block and increasing the value of the history information of the copied valid data each time the data copy operation is performed, it is possible to effectively use the history information value for distinguishing hot data from cold data.

Note that the value of each piece of history information is limited to an upper limit value. Therefore, in a case where the value of the read history information (first history information) has not reached the upper limit value, a value greater than the first history information is written to the copy destination block as new history information (second history information), and in a case where the value of the first history information has reached the upper limit value, the same value as the first history information is written to the copy destination block as the new history information (second history information). That is, the new history information (second history information) based on the value of the read history information (first history information) is written to the copy destination block.

In executing GC for the NAND flash memory 10, the controller 30 selects a target block for GC as the copy source block and determines whether or not the value of the history information read from the copy source block is greater than or equal to the threshold value. In response to determining that the value of the history information read from the copy source block is greater than or equal to the threshold value, the controller 30 selects a first block BLK as the copy destination block among the plurality of blocks BLK of the NAND flash memory 10, and, in response to determining that the value of the history information read from the copy source block is smaller than the threshold value, the controller 30 selects a second block different from the first block as the copy destination block. This avoids mixing hot data and cold data in the same block, and improves the efficiency of GC.

In addition, the controller 30 writes the history information corresponding to each piece of data to the surplus area, not to the data area used for writing data. In this manner, by writing the history information to the surplus area, it is possible to efficiently record the history information of each piece of data without reducing the size of the data area that can be used for writing data.

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made. The accompanying claims and their equivalents are intended to cover such forms or modification as would fall within the scope of the inventions.

Further aspects and embodiments are described below.

According to a first aspect there is provided a memory system comprising:
a nonvolatile memory including a plurality of blocks; and
a controller configured to write data and history information corresponding to the data to one of the plurality of blocks, a value of the history information being a value that is based on the number of times the data has been copied from a block where the data is stored to another block, wherein
the controller is configured to:
   in copying first data that is valid data stored in a copy source block of the plurality of blocks, to a copy destination block of the plurality of blocks,
   read the first data and first history information from the copy source block, the first history information being history information corresponding to the first data; and
   write the read first data and second history information to the copy destination block, the second history information being based on a value of the read first history information.

According to at least one embodiment, the controller is further configured to:
determine whether or not the value of the read first history information is greater than or equal to a threshold value;
in response to determining that the value of the read first history information is greater than or equal to the threshold value, select a first block from among the plurality of blocks as the copy destination block; and
in response to determining that the value of the read first history information is smaller than the threshold value, select a second block from among the plurality of blocks as the copy destination block, the second block being different from the first block.

According to at least one embodiment, the controller is further configured to:
generate the second history information by adding a first value to the value of the read first history information.

According to at least one embodiment, the controller is further configured to:
select a block in which a threshold period or more has elapsed since data was written as the copy source block.

According to at least one embodiment, the controller is further configured to:
in a case of selecting the block in which the threshold period or more has elapsed since the data was written as the copy source block, generate the second history information by adding a second value that is greater than the first value to the value of the read first history information.

According to at least one embodiment, the controller is further configured to:
determine whether or not the value of the read first history information has reached an upper limit value;
in response to determining that the value of the read first history information has reached the upper limit value, set a same value as the value of the read first history information as the second history information; and
in response to determining that the value of the read first history information has not reached the upper limit value, set a value that is greater than the value of the read first history information as the second history information.

According to at least one embodiment, each of the plurality of blocks includes a plurality of pages,
each of the plurality of pages includes a data area that is permitted to be accessed from outside the nonvolatile memory and a surplus area that is an area other than the data area, the surplus area being an area that is prohibited from being accessed until a specific procedure for accessing the surplus area is executed for the nonvolatile memory,
the controller is configured to write data to the data area of one of the plurality of pages included in one of the plurality of blocks, and write history information corresponding to the data to the surplus area of the one of the plurality of pages using the specific procedure, and
the controller is further configured to:
   in copying the first data stored in the copy source block to the copy destination block,
   read the first data from the data area of a first page of the copy source block, and read the first history information from the surplus area of the first page of the copy source block using the specific procedure; and
   write the first data to the data area of a second page of the copy destination block, and write the second history information to the surplus area of the second page of the copy destination block using the specific procedure.

According to a second aspect there is provided a memory system connectable to a host, the memory system comprising:
a nonvolatile memory including a plurality of blocks; and
a controller configured to write data and history information corresponding to the data to one of the plurality of blocks, a value of the history information being a value that is based on the number of times the data has been copied from a block where the data is stored to another block, wherein
the controller is configured to:
   in response to receiving a write request from the host, write data associated with the write request and an initial value of history information corresponding to the data to a write destination block of the plurality of blocks;
   in executing a garbage collection,
   in a case of selecting as a copy source block each of target blocks for the garbage collection, the target blocks for the garbage collection including a first block and a second block,
   read first data and first history information from the first block, the first data being valid data included in the first block, the first history information being history information corresponding to the first data;
   read second data and second history information from the second block, the second data being valid data included in the second block, the second history information being history information corresponding to the second data;
   determine whether or not a value of the read first history information is greater than or equal to a threshold value;
   in response to determining that the value of the read first history information is greater than or equal to the threshold value, select a third block from among the plurality of blocks as a copy destination block, write the read first data and third history information to the third block, the third history information being a value obtained by adding a first value to the value of the read first history information;
   in response to determining that the value of the read first history information is smaller than the threshold value, select a fourth block from among the plurality of blocks as the copy destination block, the fourth block being different from the third block, and write the read first data and the third history information to the fourth block;
   determine whether or not a value of the read second history information is greater than or equal to the threshold value;
   in response to determining that the value of the read second history information is greater than or equal to the threshold value, select the third block as the copy destination block, and write the read second data and fourth history information to the third block, the fourth history information being a value obtained by adding the first value to the value of the read second history information as the history information corresponding to the second data; and
   in response to determining that the value of the second history information is smaller than the threshold value, select the fourth block as the copy destination block, and write the read second data and the fourth history information to the fourth block.

According to at least one embodiment, each of the plurality of blocks includes a plurality of pages,
each of the plurality of pages includes a data area that is permitted to be accessed from outside the nonvolatile memory and a surplus area that is an area other than the data area, the surplus area being an area that is prohibited from being accessed until a specific procedure for accessing the surplus area is executed for the nonvolatile memory,
the controller is configured to write data to the data area of one of the plurality of pages included in one of the plurality of blocks, and write history information corresponding to the data to the surplus area of the one of the plurality of pages, and
the controller is further configured to:
   in executing the garbage collection,
   read the first data from the data area of a first page of the first block, and read the first history information from the surplus area of the first page of the first block using the specific procedure; and
   write the first data to the data area of a second page of the copy destination block, and write the third history information to the surplus area of the second page of the copy destination block using the specific procedure.

According to at least one embodiment, the controller is further configured to:
select a block in which a threshold period or more has elapsed since data was written as the copy source block.

According to at least one embodiment, the controller is further configured to:
in a case of selecting the block in which the threshold period or more has elapsed since data was written as the copy source block,
read fifth history information, which is the history information of the copy source block, from the copy source block, generate sixth history information by adding a second value that is greater than the first value to a value of the read fifth history information, and write the sixth history information to the copy destination block.

According to a third aspect there is provided a method of controlling a nonvolatile memory, the nonvolatile memory including a plurality of blocks, the method comprising:
writing data and history information corresponding to the data to one of the plurality of blocks, a value of the history information being a value that is based on the number of times the data has been copied from a block where the data is stored to another block;
in copying first data that is valid data stored in a copy source block of the plurality of blocks, to a copy destination block of the plurality of blocks,
reading the first data and first history information from the copy source block, the first history information being history information corresponding to the first data; and
writing the read first data and second history information to the copy destination block, the second history information being a value greater than a value of the read first history information.

## Claims

1. A memory system (1) comprising:
a nonvolatile memory (10) including a plurality of blocks; and
a controller (30) configured to write data and history information corresponding to the data to one of the plurality of blocks, a value of the history information being a value that is based on the number of times the data has been copied from a block where the data is stored to another block, wherein
the controller (30) is configured to:
in copying first data that is valid data stored in a copy source block of the plurality of blocks, to a copy destination block of the plurality of blocks,
read the first data and first history information from the copy source block, the first history information being history information corresponding to the first data; and
write the read first data and second history information to the copy destination block, the second history information being based on a value of the read first history information.

2. The memory system (1) of claim 1, wherein
the controller (30) is further configured to:
determine whether or not the value of the read first history information is greater than or equal to a threshold value;
in response to determining that the value of the read first history information is greater than or equal to the threshold value, select a first block from among the plurality of blocks as the copy destination block; and
in response to determining that the value of the read first history information is smaller than the threshold value, select a second block from among the plurality of blocks as the copy destination block, the second block being different from the first block.

3. The memory system (1) of claim 2, wherein
the controller (30) is further configured to:
generate the second history information by adding a first value to the value of the read first history information.

4. The memory system (1) of claim 3, wherein
the controller (30) is further configured to:
select a block in which a threshold period or more has elapsed since data was written as the copy source block.

5. The memory system (1) of claim 4, wherein
the controller (30) is further configured to:
in a case of selecting the block in which the threshold period or more has elapsed since the data was written as the copy source block, generate the second history information by adding a second value that is greater than the first value to the value of the read first history information.

6. The memory system (1) of claim 1, wherein
the controller (30) is further configured to:
determine whether or not the value of the read first history information has reached an upper limit value;
in response to determining that the value of the read first history information has reached the upper limit value, set a same value as the value of the read first history information as the second history information; and
in response to determining that the value of the read first history information has not reached the upper limit value, set a value that is greater than the value of the read first history information as the second history information.

7. The memory system (1) of claim 1, 2, 3, 4 or 6, wherein
each of the plurality of blocks includes a plurality of pages,
each of the plurality of pages includes a data area that is permitted to be accessed from outside the nonvolatile memory (10) and a surplus area that is an area other than the data area, the surplus area being an area that is prohibited from being accessed until a specific procedure for accessing the surplus area is executed for the nonvolatile memory (10),
the controller (30) is configured to write data to the data area of one of the plurality of pages included in one of the plurality of blocks, and write history information corresponding to the data to the surplus area of the one of the plurality of pages using the specific procedure, and
the controller (30) is further configured to:
in copying the first data stored in the copy source block to the copy destination block,
read the first data from the data area of a first page of the copy source block, and read the first history information from the surplus area of the first page of the copy source block using the specific procedure; and
write the first data to the data area of a second page of the copy destination block, and write the second history information to the surplus area of the second page of the copy destination block using the specific procedure.

8. A memory system (1) connectable to a host (2), comprising:
a nonvolatile memory (10) including a plurality of blocks; and
a controller (30) configured to write data and history information corresponding to the data to one of the plurality of blocks, a value of the history information being a value that is based on the number of times the data has been copied from a block where the data is stored to another block, wherein
the controller (30) is configured to:
in response to receiving a write request from the host (2), write data associated with the write request and an initial value of history information corresponding to the data to a write destination block of the plurality of blocks;
in executing a garbage collection,
in a case of selecting as a copy source block each of target blocks for the garbage collection, the target blocks for the garbage collection including a first block and a second block,
read first data and first history information from the first block, the first data being valid data included in the first block, the first history information being history information corresponding to the first data;
read second data and second history information from the second block, the second data being valid data included in the second block, the second history information being history information corresponding to the second data;
determine whether or not a value of the read first history information is greater than or equal to a threshold value;
in response to determining that the value of the read first history information is greater than or equal to the threshold value, select a third block from among the plurality of blocks as a copy destination block, write the read first data and third history information to the third block, the third history information being a value obtained by adding a first value to the value of the read first history information;
in response to determining that the value of the read first history information is smaller than the threshold value, select a fourth block from among the plurality of blocks as the copy destination block, the fourth block being different from the third block, and write the read first data and the third history information to the fourth block;
determine whether or not a value of the read second history information is greater than or equal to the threshold value;
in response to determining that the value of the read second history information is greater than or equal to the threshold value, select the third block as the copy destination block, and write the read second data and fourth history information to the third block, the fourth history information being a value obtained by adding the first value to the value of the read second history information as the history information corresponding to the second data; and
in response to determining that the value of the second history information is smaller than the threshold value, select the fourth block as the copy destination block, and write the read second data and the fourth history information to the fourth block.

9. The memory system (1) of claim 8, wherein
each of the plurality of blocks includes a plurality of pages,
each of the plurality of pages includes a data area that is permitted to be accessed from outside the nonvolatile memory (10) and a surplus area that is an area other than the data area, the surplus area being an area that is prohibited from being accessed until a specific procedure for accessing the surplus area is executed for the nonvolatile memory (10),
the controller (30) is configured to write data to the data area of one of the plurality of pages included in one of the plurality of blocks, and write history information corresponding to the data to the surplus area of the one of the plurality of pages, and
the controller (30) is further configured to:
in executing the garbage collection,
read the first data from the data area of a first page of the first block, and read the first history information from the surplus area of the first page of the first block using the specific procedure; and
write the first data to the data area of a second page of the copy destination block, and write the third history information to the surplus area of the second page of the copy destination block using the specific procedure.

10. The memory system (1) of claim 8, wherein the controller (30) is further configured to:
select a block in which a threshold period or more has elapsed since data was written as the copy source block.

11. The memory system (1) of claim 10, wherein the controller (30) is further configured to:
in a case of selecting the block in which the threshold period or more has elapsed since data was written as the copy source block,
read fifth history information, which is the history information of the copy source block, from the copy source block, generate sixth history information by adding a second value that is greater than the first value to a value of the read fifth history information, and write the sixth history information to the copy destination block.

12. A method of controlling a nonvolatile memory (10), the nonvolatile memory (10) including a plurality of blocks, the method comprising:
writing data and history information corresponding to the data to one of the plurality of blocks, a value of the history information being a value that is based on the number of times the data has been copied from a block where the data is stored to another block;
in copying first data that is valid data stored in a copy source block of the plurality of blocks, to a copy destination block of the plurality of blocks,
reading the first data and first history information from the copy source block, the first history information being history information corresponding to the first data; and
writing the read first data and second history information to the copy destination block, the second history information being a value greater than a value of the read first history information.
